Europäisches Patentamt

European Patent Office

Office européen des brevets

(11) Publication number: **0 133 019**
**A2**

## (12) EUROPEAN PATENT APPLICATION

(21) Application number: **84305061.8**

(22) Date of filing: **25.07.84**

(51) Int. Cl.⁴: **A 01 G 13/10**

(30) Priority: **29.07.83 GB 8320446**

(43) Date of publication of application:
**13.02.85 Bulletin 85/7**

(84) Designated Contracting States:
**AT BE DE FR GB NL SE**

(71) Applicant: **Monro Alexander & Co Ltd.**
**Newleaze Great Somerford**
**Chippenham Wiltshire SN15 5EN(GB)**

(72) Inventor: **Jeffs, Keith Derek**
**Malthouse Farm Eastcourt**
**Crudwell Near Malmesbury Wiltshire(GB)**

(74) Representative: **Arthur, George Fitzgerald et al,**
**KILBURN & STRODE 30, John Street**
**London WC1N 2DD(GB)**

(54) Tree or plant protection.

(57) A sapling (11) (FIGURE 13) can be protected when it is first planted by means of a sleeve (12) curved or folded around the trunk or stem from corrugated translucent polypopylene stapled at the meeting edges at (19) and retained and held to a stake (13) by one or more bent wire clips (14) surrounding the sleeve, crossing over, and having their free ends held together by a tie (15).

EP 0 133 019 A2

TREE OR PLANT PROTECTION.

This invention relates to the protection of newly planted saplings or other transplants with which there is the problem of providing protection during the critical early stages of growth which will not be too expensive to achieve.

A newly planted sapling may for example be particularly susceptable to prevailing winds both for deforming it and loosening the roots and also for lowering the ambient temperature and there is also the problem of loss of nutrients due to weeds growing around the newly planted stem.

It has been proposed in Perkins British Patent Specification No. 637,834 to secure a tree trunk to a stake by means of a rubber covered flexible clip or wire with a fastening plate on the other side of the stake, but that was not particularly concerned with newly planted saplings, and in any case only gave protection against the physical force of winds tending to bend the tree.

The present invention solves the problem defined above and gives the sapling its protection by virtue of a protection sleeve for being positioned spaced around the stem in conjunction with a clip for retaining the shape of the sleeve and securing it to a stake.

The sleeve which may conveniently be of corrugated or double walled plastics construction to be a good insulator and may be translucent to pass solar radiation, can provide a warm local environment for the stem to assist rapid growth in the early stages and can also be secured to the stake to provide protection against the force of winds. Also by extending right to the ground the sleeve can make it very difficult for weed seeds to germinate or thrieve in the area around the stem.

The clip being in the form of a simply bent wire in conjunction with a securing tie for passing around the other side of the stake enables assembly to be achieved very quickly from moderately priced components. The sleeve may bio degrade when the tree is established. The sleeve also provides protection against attack by animals.

The invention has various aspects . Thus, it covers the sleeve in position protecting the stem of a newly planted sapling, and also a kit of parts consisting of the sleeve and one or more clips, and possibly also one or more ties and a stake from which the protecting sleeve can be assembled and staked, and also covers the particular form of clip itself.

It will be appreciated that the dimensions of the sleeve will be related to the dimensions of the kit, and indeed where the clip is formed with permanent bends the sleeve material can also have folds so that it can easily be folded into rectangular or hexagonal shape which shape is reproduced in the clip.

Warden's British Specification No. 208025 suggests the use of a sleeve surrounding celery, but that is merely for blanching the celery and there is no suggestion of using it in conjunction with a stake, or using it for providing protection for newly planted saplings.

The invention may be carried into practice in various ways, and certain embodiments will now be described by way of example with reference to the accompanying drawings in which:-

FIGURE 1 is a plan view of a hexagonal clip

FIGURE 2 is a side view of the clip of FIGURE 1; as seen in the direction of the arrow 'A'

FIGURE 3 is a side view of the clip of FIGURE 1 as seen in the direction of the arrow 'B';

FIGURE 4 is a plan view of a tie for fastening the clips of FIGURES 1-3;

FIGURE 5 is a section through the sleeve clip and stake in use;

FIGURES 6,9,10 and 12 are plan views of alternative forms of clip;

FIGURE 7 is a section corresponding to FIGURE 5 showing the clip of FIGURE 6 in use;

FIGURE 8 is a perspective view of an alternative form of clip;

FIGURE 11 is a view corresponding to FIGURES 5 and 7 showing the clip of FIGURE 10 in use; and

FIGURE 13 is a perspective view showing the sleeve, clip, tie, and stake, in use protecting a transplant.

The invention is illustrated in FIGURE 13 where a sapling or other transplant 11 can be seen planted in the ground with its stem or trunk protected by a sleeve 12 which is held to a stake 13 by a clip 14 and a tie 15. The length of the sleeve will depend upon the height of the transplant and it may well be that two or even three clips and ties may be used for a long sleeve and stake.

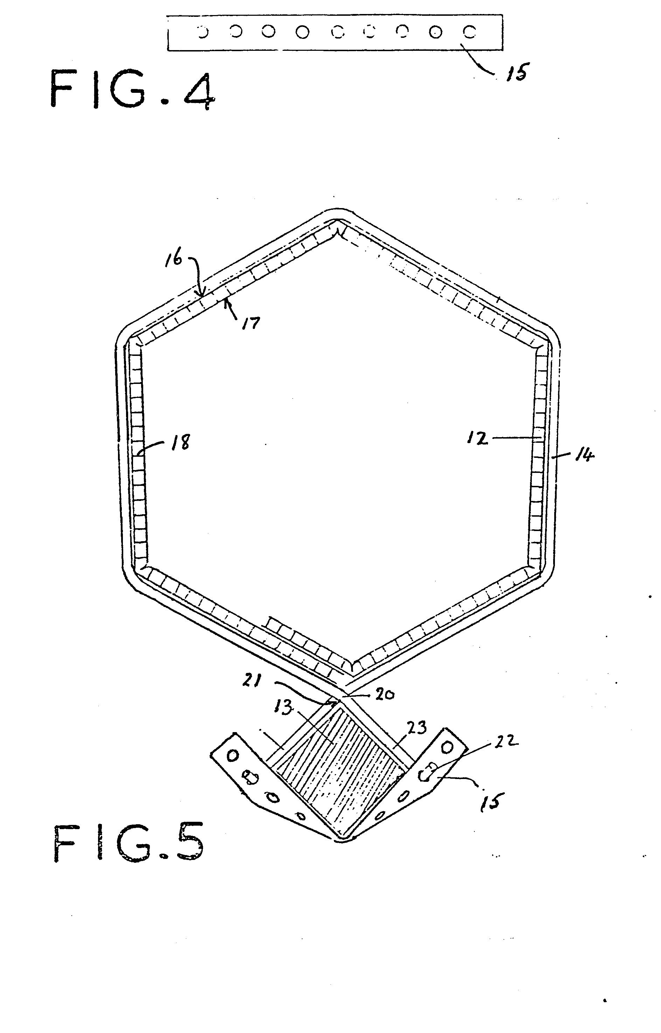

The sleeve 12 is folded from a sheet of corrugated polypropylene or other plastics material which is conveniently in the form of two translucent sheets 16 and 17 ( FIGURE 5) joined by spaced elongate interconnecting ribs 18. The material is conveniently supplied in sheet form and folded by elongate folds into the form of a square as shown in FIGURE 13 or perhaps a hexagon as shown in FIGURE 5, and then the overlapping ends are connected by using staples 19. The most convenient method is to fold and staple the sheet material and then open it into a sleeve around the stem after the transplant has been planted.

The stake 13 is then driven into the ground close to the sleeve 12 and the sleeve is secured to the stake by one or more clips 14 each of which is associated with a tie 15 as described in great detail below.

The sleeve protects the stem of the transplant from side winds and provides a heat insulating layer of air around the stem and also can permit the passage of radiation from the sun. Also the stem cannot be easily attacked by animals. In a convenient case the wall thickness of the sleeve may be about 3mm.

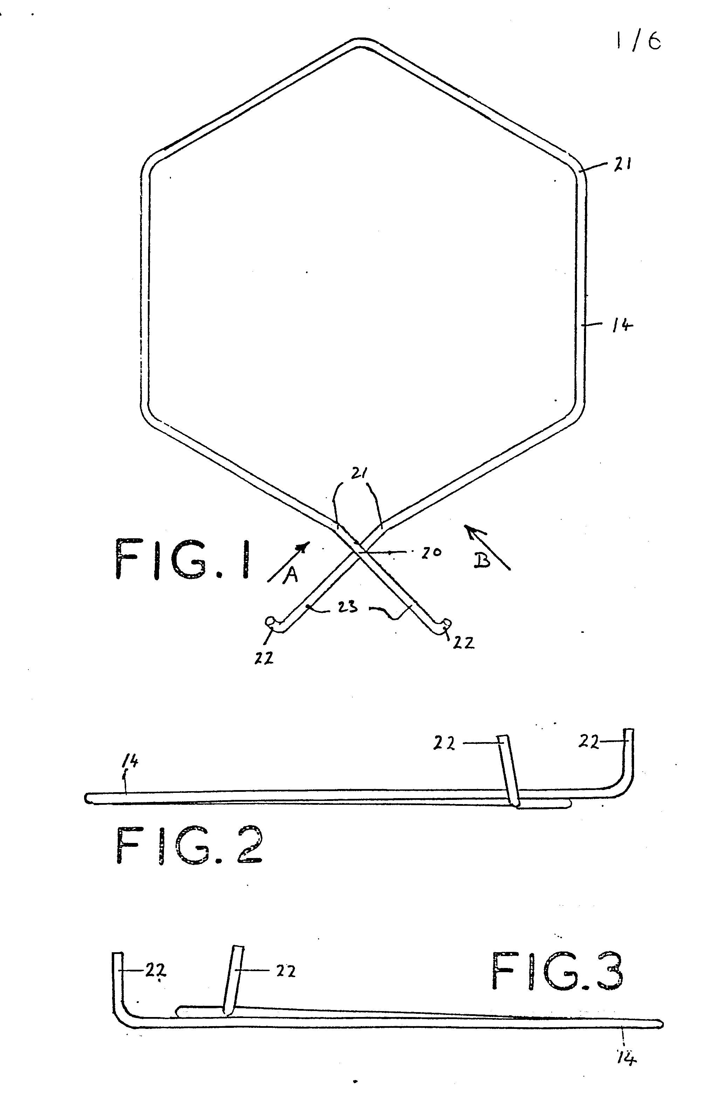

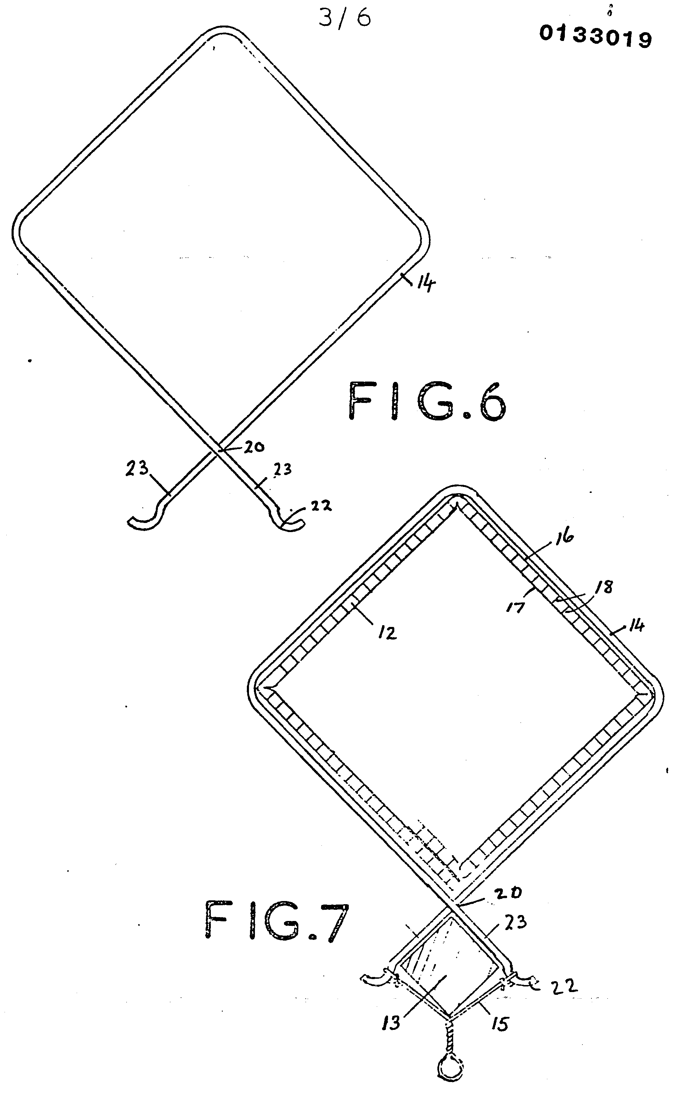

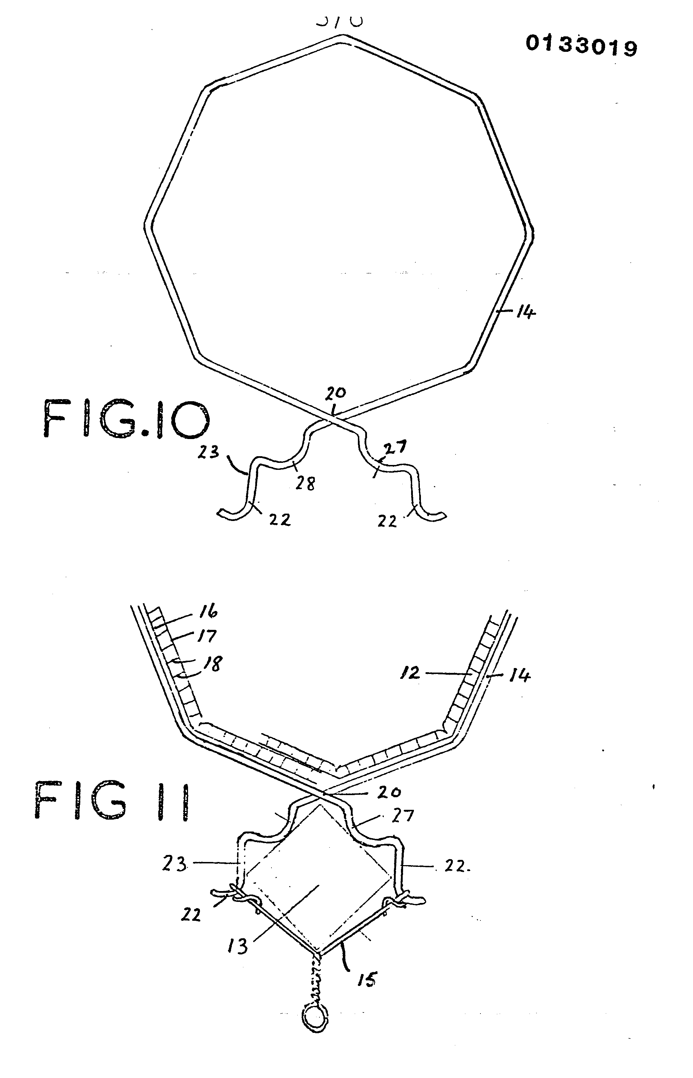

One form of clip suitable where the sleeve is of hexagonal form is shown in FIGURES 1,2, and 3. It is formed from a metal, or possibly a plastics, wire which is conveniently sufficiently rigid to maintain straight sides and bends, and in one example is of 14 SWG galvanised steel of circular cross section. There is a bend 21 at each corner of the hexagon, and also where the two ends of the clip wire come together and cross at 20, there is a slight reverse bend 21 in each end of the wire up to 20 mm upstream of the cross over at 20, and preferably in the range 2-10 mm upstream of the cross-over. Beyond the cross-over the ends of the wire clip are formed into extensions 22 which may be at nearly 90° to the plane of the loop as shown in FIGURES 2 and 3, or may be generally in the plane of the loop as shown in FIGURES 6 and 9. The bends 21 in FIGURE 1 are such as to make the angle between the ends 23 of the tie about 80°; a little less than 90°.

The clip can be opened out to be slipped around the sleeve with the angle between the ends 23 accommodating one angle of the stake 13 as shown in FIGURE 5, and then the tie 15 in the form of a perforated plastics strap, as shown in FIGURE 4 has selected perforations fitted over the extensions 22 to hold the ends of the wire firmly around
the stake, and to tighten the chip   around the
sleeve.The tie 15 may be slightly elastically
resilient to allow a tight connection to be made
over the extensions 22. There may be some compression
exerted on the sleeve depending upon the position of the
bends 21 in relation to the position and size of the
stake, but in any case the clip will retain the sleeve in shape.

It will be appreciated that the sleeve can
be fitted very quickly, and easily, and yet provides
very effective protection during the early period
in the life of the transplant.

FIGURES 6 and 7 show a rather simplified
version of the assembly in that the sleeve is
of square cross section, and the clip 14 is of
corresponding shape.  In this case there are
no bends such as the bends 21 upstream of the
cross over point 20, and the tie is in the form
of a          wire 24 having its ends looped
over the extensions 22 and twisted together.
The extensions 22 are appropriately shaped for
that purpose.

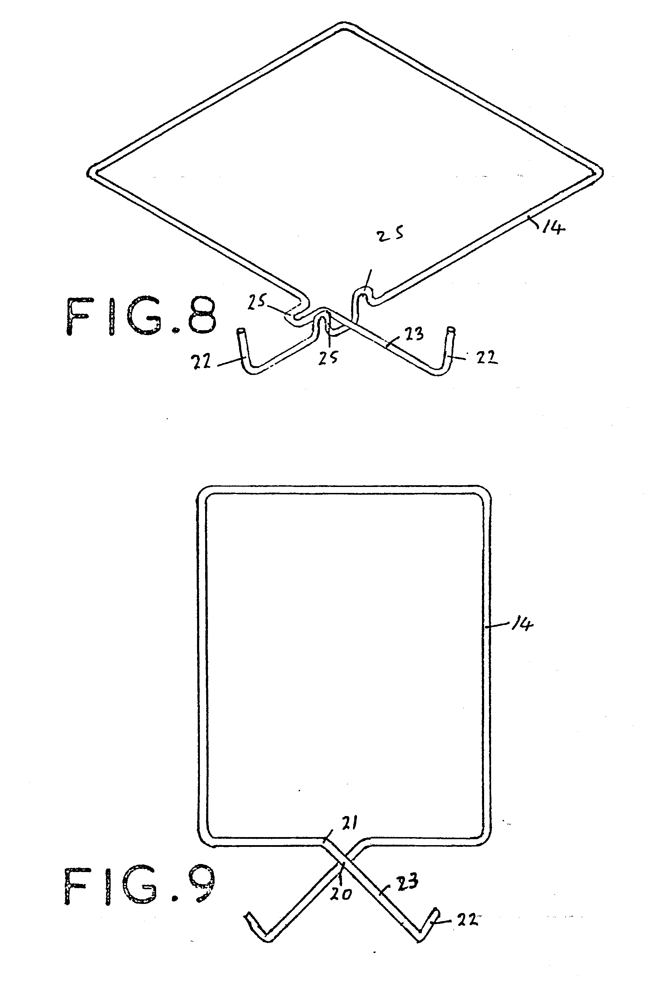

FIGURE 8 shows an alternative form of clip
in which the ends of the wire are formed with
'U' bends 25 to prevent the clip being tightened
past  the point where the bends on the respective
ends of the wire clip come into contact with
each other.

FIGURE 9 shows a clip for a sleeve of rectangular
cross section, and also shows how the ends 23

0133019

can be formed along one of the sides of the clip rather than at an apex.

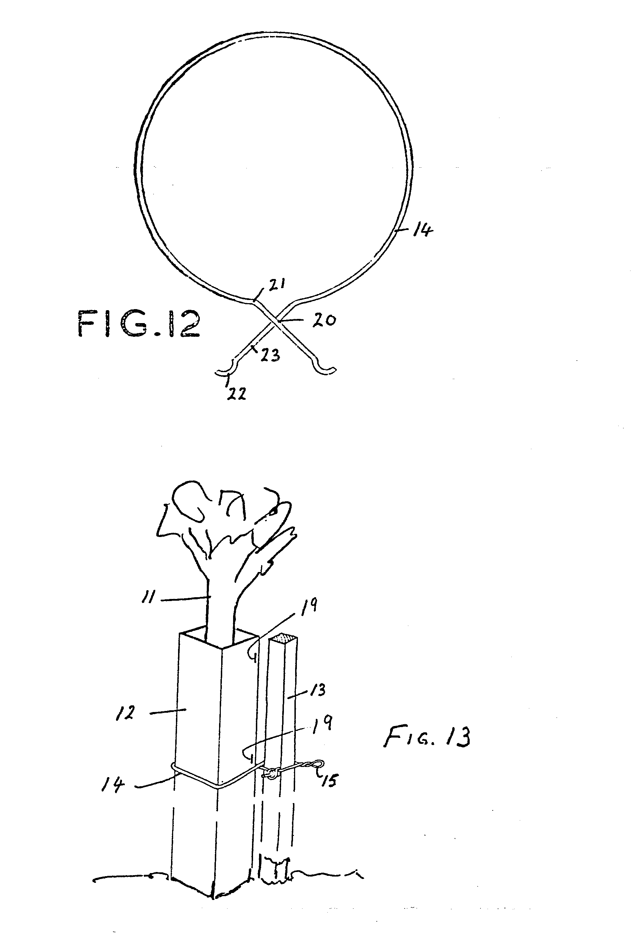

FIGURE 10 shows a clip suitable for supporting a sleeve with an octagonal cross section, and also shows another form which is possible for the ends  of the clip .  It will be seen that each end has a pair of bends 27 and 28 and FIGURE 11 shows how when the tie 15 is secured in the bends 28 , the bends 27  bear against the sides of the stake on either side of the edge facing the sleeve.       It  will be seen how compression can be applied to the sleeve by tightening the tie 15 using as fulcra the points of contact of the bends 27 with the sides of the stake.

FIGURE 12 illustrates a clip which can be used if the sleeve is of circular cross section.

The idea of protecting the stem of a transplant in relation to a stake in such a simple manner is a very novel and effective way of starting a transplant, and the kit of parts necessary for achieving this consists merely of the sleeve which may be in the flat,one or more clips, and one or more ties,together with a stake, although it is not necessary to provide the stake with the rest of the components.

A typical sleeve might be 1.2 metres high and the spacing between opposite sides of the sleeve might be perhaps 8,10 or 12 cm to allow a reasonable local air space around the stem. A 2.5 cm diameter or 2.5 cm square stake would be suitable in most cases.

The sleeve may be circular in section, but corrugated sheet material does not easily curve without bending. Accordingly a polygonal shape is satisfacotry, and can of course be retained by the correspondingly shaped clip, for also holding it to the stake.

One shape has two sides of equal length 'a' to be at right angles to each other, and three sides of equal length 'b' where 36=2a so that after stapling and before opening out the sleeve can be folded flat by folds at the ends of the two longer sides away from the right angle.

CLAIMS

1.  A sleeve (12) protecting a tree or plant stem and held in position spaced around the stem by a detactable clip (14) which is also used beyond a point (20) where the ends (23) of the clip cross to attach the clip and sleeve to a supporting post (13).

2.  A kit of parts for protecting a tree or plant comprising a protection sleeve (12) and one or more wire or like clips (14) capable of supporting the sleeve around the plant stem (11), crossing over, and being attached to a supporting post (13) beyond the crossing point (20).

3.  A sleeve as claimed in Claim or a kit as claimd in Claim 2 including also a tie (15) for the ends of the/or each clip.

4.  A sleeve and clip as claimed in Claim 1 in combination with a tie as claimed in Claim 3 with the tie in position to define with the ends of the clip a space surrounding the supporting post.

5.  A sleeve protecting a tree as claimed in any of Claims 1,3, and 4, or constituting a component of a kit of parts as claimed in Claim 2 of double walled or corrugated construction of plastics or other material to have good thermal insulating properties.

6.  A sleeve as claimed in Claim 5 having folds corresponding in position to permanently formed bends (21) in the clip.

7.  A tree protection sleeve support clip bent in such a manner that the wire crosses over itself to form a loop with the ends of the wire extending beyond the crossing point (20) and outside the area enclosed by the loop and formed to provide means (22) for securing the clip to a supporting post (13).

8.  A clip as claimed in Claim 7 having reverse bends within the loop area enabling the clip to compress a tree protection sleeve within the loop when a tie is applied to the ends of the wire.

9.  A clip as claimed in Claim 7 or Claim 8 including stops (25) formed in the wire near the crossing point for limiting the amount of relative movement permitted between the ends at the crossing point.

10. A clip as claimed in any of Claims 7-9 or in combination with a sleeve as claimed in Claim 1 or constituting part of a kit of parts as claimed in Claim 2 in which the ends of the wire beyond the crossing point receiving or for receiving the supporting post are at an angle of a little less than 90° to each other.

FIG.1

FIG.2

FIG.3

FIG.4

FIG.5

FIG.6

FIG.7

FIG.8

25

14

25

25

22

23

22

25

FIG.9

14

21

20

23

22

0133019

FIG.IO

20

23
28
27

22          22

FIG II

16
17
18

12          14

20

27

23          22.

22

13

15

FIG.12

21
20
23
22
14

FIG. 13

11
19
12
13
19
14
15